# FASCICULE DE BREVET EUROPEEN

(11) **EP 3 427 569 B1**
(45) Date de publication et mention de la délivrance du brevet: **30.11.2022**
(21) Numéro de dépôt: 18183116.5
(22) Date de dépôt: 12.07.2018
(51) Int. Cl.: A01F 25/20, A01K 5/00

(54) **VÉHICULE AUTOMOTEUR POUR COLLECTER ET DISTRIBUER DES PRODUITS FRAGMENTAIRES**
KRAFTFAHRZEUG ZUM SAMMELN UND VERTEILEN VON FRAGMENTARISCHEN PRODUKTEN
SELF-PROPELLED VEHICLE FOR COLLECTING AND DISTRIBUTING FRAGMENTARY PRODUCTS

(30) Priorité: 13.07.2017 FR 1756677
(43) Date de publication de la demande: 16.01.2019
(73) Titulaire: Kuhn-Audureau SAS, 85260 La Copechagnière (FR)
(72) Inventeur: LALLEMAND, Yvenick, 85480 SAINT HILAIRE LE VOUHIS (FR); BERTHELOT, Emmanuel, 85290 SAINT LAURENT SUR SEVRE (FR)
(74) Mandataire: Cabinet Nuss

(56) Documents cités:
- WO-A1-96/14735
- WO-A1-2016/078757
- WO-A2-2010/081802
- DE-U1- 20 105 747
- FR-A1- 2 843 719
- US-A1- 2010 036 569

## Description

La présente invention concerne le domaine des machines et véhicules destinés au chargement de produits dans un contenant mobile, par exemple de produits en vrac reposant au sol et devant être transférés dans une cuve ou un bac de réception porté(e) par un véhicule, et a pour objet un véhicule automoteur piloté par un conducteur pour collecter, éventuellement traiter, et distribuer des produits fragmentaires.

Le type de véhicule évoqué ci-dessus est utilisé dans de nombreux domaines et comprend généralement, d'une part, une cuve de réception et de mélange, un bras de chargement muni à son extrémité libre d'un organe de prélèvement et équipé d'un dispositif de transfert des produits prélevés par l'organe vers la cuve et un châssis roulant motorisé portant notamment la cuve et le bras précités, ainsi qu'un poste de conduite, ledit véhicule présentant notamment un mode de fonctionnement opérationnel en vue du remplissage de la cuve par le bras de chargement, dit « mode chargement », et un mode de fonctionnement en vue du déchargement des produits présents dans la cuve, dit « mode distribution », le déchargement étant généralement effectué latéralement au moyen d'un tapis transporteur.

Ces véhicules, par exemple du type mélangeuse, sont notamment mis en œuvre dans le domaine agricole pour collecter et traiter des produits d'alimentation animale stockés en silo, conditionnés en bottes ou posés en tas au sol, et ensuite pour les distribuer.

Ce type de véhicule ou d'engin agricole pour collecter, traiter/mélanger et distribuer des produits, généralement connu sous la désignation mélangeuse ou désileuse mélangeuse, est par exemple commercialisé par la demanderesse, sous différentes variantes et tailles, en tant que mélangeuses automotrices de la gamme SPW.

Ces véhicules comportent chacun un châssis muni de roues motrices à l'arrière et directrices à l'avant et sont adaptés pour faire des trajets sur des routes ou des chemins. A l'avant du châssis est placée une cabine de pilotage comportant un siège pour l'utilisateur ainsi qu'un volant de direction et les diverses commandes mécaniques, électriques ou hydrauliques des organes de travail du véhicule. A l'arrière du châssis est placée une unité d'entraînement comportant un moteur thermique alimentant une centrale hydraulique pour l'entraînement et la commande des roues et des différents organes de travail. Le châssis porte un bras de chargement avec à son extrémité frontale une fraise de chargement. Le bras pivote autour d'un axe transversal de manière à ce que la fraise atteigne différentes positions.

Les moyens de motorisation et d'entraînement de ce type de véhicules (pilotés par un conducteur) présentent une puissance délivrée suffisante pour que l'effort de poussée maximal pouvant être fourni soit adapté pour permettre au véhicule de monter une pente (par exemple route ou chemin à 15 % de dénivelé) lorsque la cuve est totalement chargée. Un tel effort de poussée est incompatible avec une mise en œuvre normale et pérenne du bras de chargement et de l'organe de prélèvement, comme expliqué ci-après.

Pour le chargement des produits, le bras de chargement est positionné à la hauteur adéquate pour que la fraise de chargement en rotation vienne saisir les produits tels que de l'ensilage, du foin, de l'enrubanné ou de la paille présents au sol.

Lors du chargement de produits d'ensilage dans un silo, le véhicule automoteur a tendance à pousser contre le tas d'ensilage ce qui peut aboutir à un blocage de la rotation de la fraise. Etant donné que le véhicule pousse en finalité contre un mur ou une masse importante, ses roues motrices ont tendance à patiner puisqu'il est bloqué dans son avance (usure anormale des pneus). Pour éviter ce phénomène, l'utilisateur va solliciter les freins et devra apprendre à doser l'effort d'avancement de l'appareil en fonction du niveau de chargement de la cuve de mélange, ce qui exige non seulement une pratique éprouvée mais également une dextérité adéquate et, en tout cas, ne permet pas de garantir à chaque fois un « dosage » optimal de l'effort d'avancement. L'utilisateur va également actionner la pédale de frein du véhicule dans la phase d'approche du produit à charger dans le but de réduire sa vitesse d'avance. Une action similaire, appui sur les freins, peut se produire dans la phase de distribution du produit contenu dans la cuve (mode distribution), pour ralentir le véhicule en attendant l'ouverture complète d'une barrière à l'extrémité d'un bâtiment ou à l'extrémité d'un couloir d'alimentation.

Lors du chargement de bottes, celles-ci ont tendance à se déplacer pendant le chargement ce qui complique la manœuvre et augmente le temps de chargement. En outre, ces différentes manœuvres entraînent des sollicitations variables du système de motorisation, notamment des sollicitations en surrégime par rapport aux besoins effectifs et à la puissance effectivement utile ou exploitable, aboutissant à une surconsommation inutile de carburant.

Par le document DE 20105 747 U, on connaît un véhicule du type évoqué en introduction et conforme au préambule de la revendication 1, lequel est pourvu d'un dispositif de régulation de la vitesse d'avance destiné permettant de tenir une consigne et d'aboutir à une quantité distribuée régulière.

Le but principal de la présente invention consiste, pour un véhicule selon le préambule de la revendication 1, de fournir une solution permettant de surmonter au moins certains des, préférentiellement tous les inconvénients relevés précédemment. Cette solution devra permettre, par exemple, d'éviter une sollicitation trop importante du bras de chargement et de l'organe de prélèvement (par exemple une fraise rotative, dont on cherchera à éviter le blocage), de rendre (au moins dans certains modes de fonctionnement) l'effort d'avancement du véhicule indépendant de la dextérité de l'utilisateur (conducteur) en mode chargement, de protéger les freins, et de diminuer la consommation de carburant.

A cet effet, l'invention a pour objet un véhicule automoteur selon le préambule de la revendication 1 et caractérisé en ce qu'il comporte un dispositif de régulation de l'effort d'avancement fourni par le châssis roulant motorisé, configuré pour être actif lorsque l'organe de prélèvement est activé par le conducteur dans le mode chargement et/ou lors d'un appui sur la pédale de frein dans le mode chargement ou dans le mode distribution.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
les figures 1A et 1B sont des vues en élévation latérales de deux côtés opposés d'une mélangeuse automotrice en mode chargement ;
la figure 2 est une représentation schématique d'un système de motorisation d'un véhicule du type représenté figures 1A et 1B, avec son dispositif de gestion et de commande, comportant également un dispositif de régulation en accord avec un mode de réalisation de l'invention, et,
la figure 3 est un schéma bloc fonctionnel simplifié du dispositif de régulation faisant partie du système représenté figure 2.

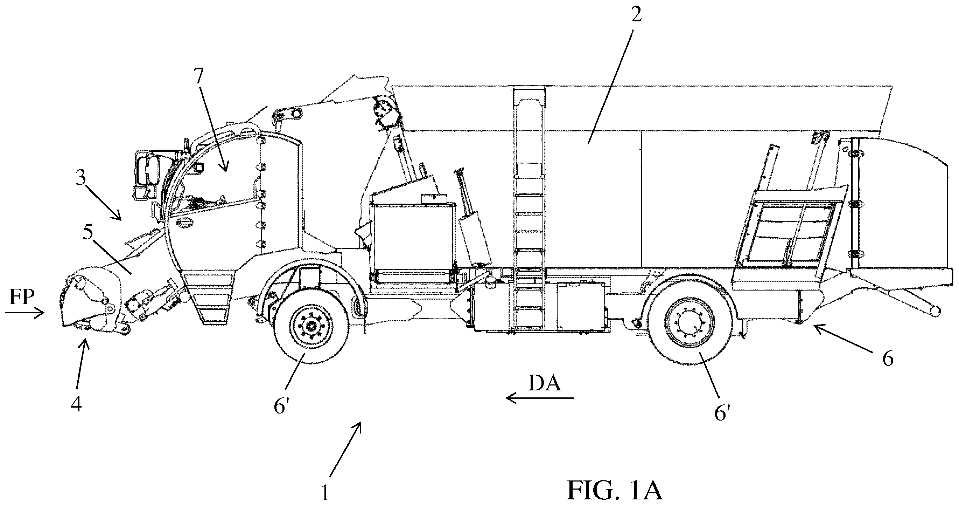

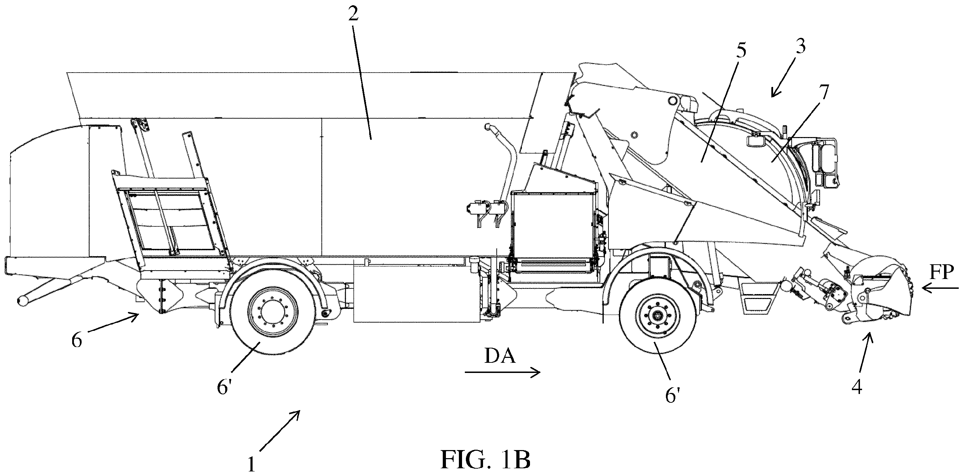

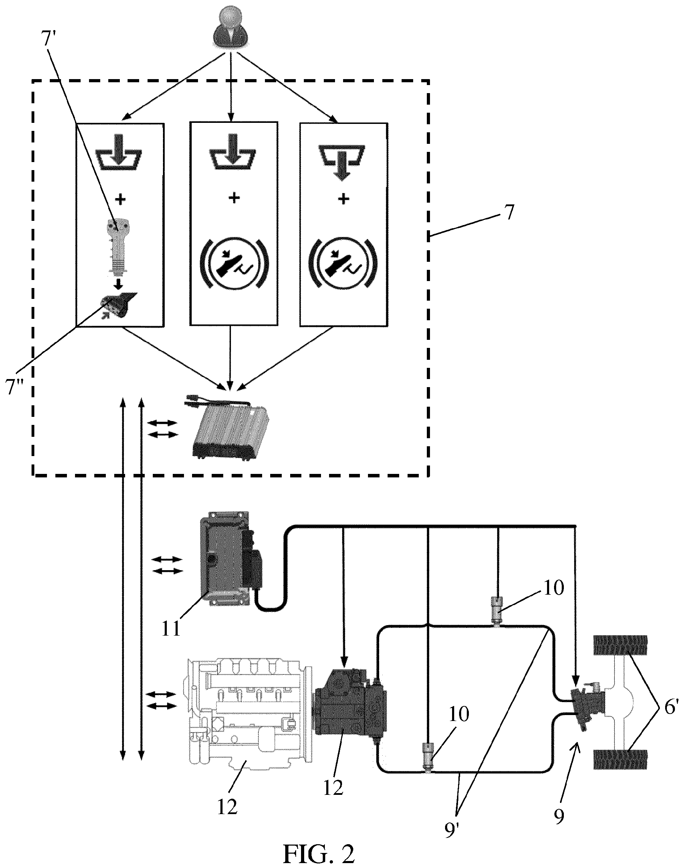

Les figures 1A et 1B, et partiellement la figure 2, illustrent un véhicule automoteur piloté par un conducteur pour collecter, et éventuellement traiter, des produits fragmentaires, notamment granulaires et/ou fibreux.

Ce véhicule 1 comprend une cuve 2 de réception et de mélange, un bras 3 de chargement muni à son extrémité libre d'un organe de prélèvement 4 et équipé d'un dispositif 5 de transfert des produits prélevés par l'organe 4 vers la cuve 2 et un châssis roulant motorisé 6 portant notamment la cuve 2 et le bras 3 précités, ainsi qu'un poste de conduite 7. Le châssis roulant 6 est muni de roues motrices à l'arrière et directrices à l'avant, formant les moyens de roulement 6'. Les roues motrices sont équipées de moyens de freinage (non représentés). Selon une alternative, les quatre roues sont munies de moyen de freinage (non représentés).

Le poste de conduite 7 comporte notamment un levier 7' permettant de contrôler le sens ou la direction d'avancement DA et la vitesse de déplacement du véhicule 1 et une pédale de frein 7". Le levier 7' est avantageusement une poignée dite multifonctions qui rassemble plusieurs boutons. Une fonction spécifique est attribuée à chaque bouton ou commutateur. Le chauffeur ou conducteur actionne le levier 7' avec sa main vers l'avant pour un déplacement vers l'avant et vers l'arrière pour un déplacement vers l'arrière. Le levier 7' dispose également d'une position neutre dans laquelle le véhicule 1 s'arrête. Pour ralentir ou arrêter le véhicule 1 progressivement, le chauffeur doit ramener progressivement le levier 7' vers sa position neutre. Pour ralentir ou arrêter le véhicule 1 rapidement, le chauffeur appuie sur la pédale de frein 7" avec son pied pour activer les freins du ou des essieux du véhicule 1. Ledit véhicule 1 présente notamment un mode de fonctionnement opérationnel en vue du remplissage de la cuve 2 par le bras de chargement 3, dit « mode chargement », un mode de fonctionnement opérationnel en vue du déchargement du produit mélangé dans la cuve 2, dit « mode distribution » et un mode de fonctionnement permettant le déplacement du véhicule 1, dit «mode déplacement ». Le passage d'un mode à un autre se fait au moyen d'un interrupteur, éventuellement prévu sur le levier 7'. Le chauffeur du véhicule 1 sélectionne manuellement le mode de fonctionnement et une fonction spécifique est attribuée à chaque bouton de la poignée multifonctions 7', éventuellement selon le mode choisi.

Le mode déplacement est activé quand il s'agit de faire des trajets sur routes et chemins pour rejoindre un bâtiment ou une ferme sur laquelle des animaux sont à nourrir. L'un des boutons de la poignée multifonctions 7' permet par exemple de sélectionner la gamme de vitesse d'avance et notamment la vitesse maximale de déplacement.

Conformément à l'invention, ledit véhicule 1 comprend également un dispositif 8 de régulation de l'effort d'avancement fourni par le châssis roulant motorisé 6 lorsque l'organe de prélèvement 4 est activé par le conducteur dans le mode chargement. L'organe de prélèvement 4 est activé et désactivé par l'intermédiaire d'un bouton correspondant de la poignée 7' multifonctions. Le dispositif 8 de régulation automatique autorise une gestion de la transmission d'avancement limitée (fixation d'un effort d'avancement maximum autorisé) dans le but de protéger les freins et de limiter la consommation de carburant, et surtout d'éviter d'endommager le bras 3 et l'organe 4.

D'une manière alternative, la désactivation de l'organe de prélèvement 4 se fait de manière automatique lorsque le poids dans la cuve 2 a atteint la valeur prédéterminée.

Grâce à cette disposition spécifique de l'invention, le but recherché est atteint et divers avantages souhaités sont fournis, à savoir notamment, un effort de contact maîtrisé au niveau de l'organe de prélèvement, et un contrôle de la force de poussée fournie, avec un dosage de l'effort d'avance, indépendamment de l'utilisateur.

D'une manière préférentielle, le dispositif 8 de régulation automatique de l'effort d'avancement fourni par le châssis roulant motorisé est également utile et actif lors d'un appui sur la pédale de frein dans le mode chargement ou dans le mode distribution. En effet, d'une part dans le mode chargement, lorsque le véhicule 1 est en approche du produit à charger, le chauffeur a tendance à appuyer sur la pédale de frein 7" pour ralentir le véhicule et, d'autre part, dans le mode distribution, lorsque le véhicule 1 arrive au niveau d'une table d'alimentation et qu'une barrière doit s'ouvrir pour y autoriser l'accès, le chauffeur appuie sur la pédale de frein 7" en attendant l'ouverture complète de la barrière. La barrière peut également être une porte. Une telle situation peut également se produire au bout d'un couloir d'alimentation. Le couloir d'alimentation permet au véhicule 1 de circuler et de distribuer le mélange contenu dans la cuve 2 sur une table d'alimentation ou dans une auge.

En accord avec un mode de réalisation préféré de l'invention, le dispositif de régulation automatique 8 consiste en un dispositif de limitation ou de freinage, passif ou actif, limitant le couple appliqué aux moyens de roulement 6' tracteurs et/ou propulseurs faisant partie du châssis roulant motorisé 6.

Une telle réalisation permet, lorsque le dispositif 8 est actif, de limiter de manière générale les contraintes au niveau du véhicule 1, de réduire la consommation de carburant (fixation d'un couple limite supérieur autorisé) et de moins solliciter le système de freinage (et donc l'usure des freins).

Dans le cadre d'une application très avantageuse de l'invention, utilisant une technologie de motorisation répandue dans les domaines industriel et agricole, il peut être prévu que le(s) système(s) de motorisation ou d'entraînement 9 des moyens de roulement 6' du châssis roulant motorisé 6 soi(en)t de nature hydraulique et que le dispositif de régulation automatique 8 comprenne, ou consiste en, un limiteur de pression intégré dans le circuit d'alimentation 9' du système de motorisation 9 faisant partie du châssis roulant motorisé 6 (figure 2).

Selon une première variante constructive, le dispositif de régulation 8 peut alors présenter une construction très élémentaire et consister en un simple composant passif de limitation de la pression monté dans la portion de circuit d'alimentation 9' déterminant la marche avant du véhicule 1, ou dans une dérivation de ce circuit alimentée conditionnellement lorsque le « mode chargement » est actif.

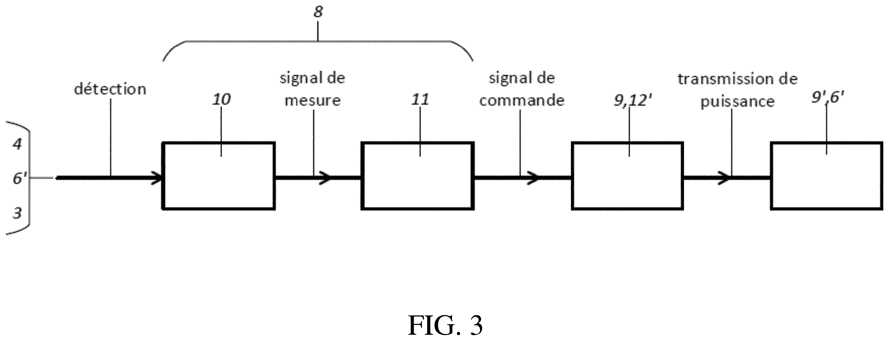

Selon une seconde variante constructive, ressortant par exemple de la figure 3, applicable aussi aux autres technologies de motorisation possibles pour le véhicule 1, le dispositif de régulation automatique 8 comprend au moins un moyen capteur 10 dont le signal de mesure est exploité par un système électronique 11 pour réguler l'effort d'avancement, ce système faisant également partie du dispositif 8 (le système 11 pouvant être spécifique ou existant).

En relation avec un entraînement de nature hydraulique, illustré à titre d'exemple sur la figure 2, le ou l'un des moyen(s) capteur(s) 10 peut être un capteur de pression, monté et configuré pour mesurer la pression d'une partie au moins du circuit hydraulique 9' d'alimentation du système de motorisation 9 du châssis roulant motorisé 6.

Comme le montre la figure 2, le capteur de pression 10 considéré peut mesurer la pression de la partie du circuit d'alimentation 9' hydraulique déterminant le déplacement en marche avant des moyens de roulement 6' par l'intermédiaire du système de motorisation 9 (par exemple un moteur hydraulique 9 entraînant l'essieu commun aux deux roues arrière propulsatrices 6' du véhicule 1, comme illustré sur la figure 2). Le signal de mesure du capteur 10 est exploité par un système électronique 11 spécifique ou non (par exemple le module de gestion et de pilotage du fonctionnement global du véhicule 1 et de ses différentes composantes, prenant également en compte les commandes de l'utilisateur). Ce système électronique 11 peut par exemple contrôler la pompe 12' entraînée par le moteur thermique 12 du véhicule 1, et donc réguler la pression dans le circuit d'alimentation 9', c'est-à-dire limiter la puissance délivrée au système de motorisation (moteur hydraulique commun 9) entraînant les moyens de roulement 6' (lorsque le mode chargement est actif).

En variante, ou en plus de la solution représentée sur la figure 2, le ou l'un des moyen(s) capteur(s) 10 peut être un capteur de pression monté et configuré pour mesurer la force de pression FP exercée sur l'organe de prélèvement 4 et/ou sur le bras de chargement 3, ce dans la direction opposée à la direction d'avance normale DA du véhicule 1 au cours d'une opération de chargement.

De manière alternative ou additionnelle par rapport aux deux variantes ci-dessus, il peut aussi être prévu que le ou l'un des moyen(s) capteur(s) 10 soit un capteur de couple ou de vitesse monté et configuré pour mesurer soit le couple appliqué à un organe de prélèvement 4 de type rotatif, tel qu'une fraise, soit la vitesse de rotation dudit organe 4.

Conformément à une autre variante encore, le ou l'un des moyen(s) capteur(s) 10 peut être un capteur de glissement ou de patinage des moyens de roulement 6' du châssis roulant motorisé 6. Ce capteur de glissement ou de patinage peut le cas échéant être mis en œuvre en association avec au moins un des autres capteurs évoqués précédemment.

Bien entendu, selon le type de capteurs précités utilisés et les grandeurs physiques mesurées, les valeurs seuils déclenchant une limitation de l'effort de déplacement, c'est-à-dire du couple ou de la puissance fourni(e) aux moyens de roulement 6', seront différentes, ces valeurs pouvant être déterminées lors d'essais ou de tests en situation réelle d'utilisation des véhicules 1.

La figure 2 illustre un poste de conduite 7 qui est équipé, en plus de la pédale de frein 7", d'un levier de commande 7' pour piloter le véhicule 1 et ses équipements, par exemple sous la forme d'une poignée multifonctions équipée de boutons et/ou de commutateurs.

En accord avec une application privilégiée de l'invention, le véhicule 1 consiste en un véhicule agricole du type mélangeuse automotrice, préférentiellement équipée également de moyens de pesée.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Véhicule automoteur piloté par un conducteur pour collecter, éventuellement traiter, et distribuer des produits fragmentaires, notamment granulaires et/ou fibreux, comprenant une cuve (2) de réception et de mélange, un bras (3) de chargement muni à son extrémité libre d'un organe de prélèvement (4) et équipé d'un dispositif (5) de transfert des produits prélevés par l'organe (4) vers la cuve (2) et un châssis roulant motorisé (6) portant notamment la cuve (2) et le bras (3) précités, ainsi qu'un poste de conduite (7), ledit véhicule (1) présentant notamment un mode de fonctionnement opérationnel en vue du remplissage de la cuve (2) par le bras de chargement (3), dit « mode chargement », et un mode de fonctionnement en vue du déchargement des produits présents dans la cuve (2), dit « mode distribution »,
véhicule (1) **caractérisé en ce qu'**il comporte un dispositif (8) de régulation de l'effort d'avancement fourni par le châssis roulant motorisé (6), configuré pour être actif lorsque l'organe de prélèvement (4) est activé par le conducteur dans le mode chargement et/ou lors d'un appui sur une pédale de frein dans le mode chargement ou dans le mode distribution.

2. Véhicule selon la revendication 1, **caractérisé en ce que** le dispositif de régulation (8) consiste en un dispositif de détermination automatique de l'effort de poussée ou d'avancement maximum disponible dans le mode chargement et/ou distribution.

3. Véhicule selon la revendication 1 ou 2, **caractérisé en ce que** le dispositif de régulation (8) est de type automatique et consiste en un dispositif de limitation ou de freinage, passif ou actif, limitant le couple appliqué aux moyens de roulement (6') tracteurs et/ou propulseurs faisant partie du châssis roulant motorisé (6).

4. Véhicule selon l'une quelconque des revendications 1 et 2, **caractérisé en ce que** le(s) système(s) de motorisation ou d'entraînement (9) des moyens de roulement (6') du châssis roulant motorisé (6) est de nature hydraulique et **en ce que** le dispositif de régulation (8) est de type automatique et comprend, ou consiste en, un limiteur de pression intégré dans le circuit d'alimentation (9') du système de motorisation (9) faisant partie du châssis roulant motorisé (6).

5. Véhicule selon l'une quelconque des revendications 1 à 4, **caractérisé en ce que** le dispositif de régulation (8) est de type automatique et comprend au moins un moyen capteur (10) dont le signal de mesure est exploité par un système électronique (11) pour réguler l'effort d'avancement.

6. Véhicule selon la revendication 5, **caractérisé en ce que** le ou l'un des moyen(s) capteur(s) (10) est un capteur de pression, monté et configuré pour mesurer la pression d'une partie au moins du circuit hydraulique (9') d'alimentation du système de motorisation (9) du châssis roulant motorisé (6).

7. Véhicule selon la revendication 5, **caractérisé en ce que** le ou l'un des moyen(s) capteur(s) (10) est un capteur de pression monté et configuré pour mesurer la force de pression (FP) exercée sur l'organe de prélèvement (4) et/ou sur le bras de chargement (3), ce dans la direction opposée à la direction d'avance normale (DA) du véhicule (1) au cours d'une opération de chargement.

8. Véhicule selon la revendication 5, **caractérisé en ce que** le ou l'un des moyen(s) capteur(s) (10) est un capteur de couple ou de vitesse monté et configuré pour mesurer soit le couple appliqué à un organe de prélèvement (4) de type rotatif, tel qu'une fraise, soit la vitesse de rotation dudit organe (4).

9. Véhicule selon la revendication 5, **caractérisé en ce que** le ou l'un des moyen(s) capteur(s) (10) est un capteur de glissement ou de patinage des moyens de roulement (6') du châssis roulant motorisé (6).

10. Véhicule selon l'une quelconque des revendications 1 à 9, **caractérisé en ce que** le poste de conduite (7) est équipé, en plus de la pédale de frein (7"), d'un levier de commande (7') pour piloter le véhicule (1) et ses équipements, par exemple sous la forme d'une poignée multifonctions équipée de boutons et/ou de commutateurs.

11. Véhicule selon l'une quelconque des revendications 1 à 10, **caractérisé en ce qu'**il consiste en un véhicule agricole du type mélangeuse automotrice, préférentiellement équipée également de moyens de pesée.

## Patentansprüche

1. Selbstfahrendes Fahrzeug, das von einem Fahrer gesteuert wird, um fragmentierte, insbesondere körnige und/oder faserige Produkte aufzusammeln, eventuell zu verarbeiten und zu verteilen, mit einem Mischbehälter (2), einem Ladearm (3), der an seinem freien Ende mit einem Entnahmeelement (4) versehen und mit einer Übermittlungsvorrichtung (5) für die von dem Element (4) entnommenen Produkte in den Behälter (2) ausgestattet ist, und einem motorisierten fahrenden Rahmen (6), der insbesondere den oben genannten Behälter (2) und den Arm (3) trägt, sowie einen Führerstand (7), wobei das Fahrzeug (1) insbesondere eine operative Betriebsart zum Füllen des Behälters (2) durch den Ladearm (3), so genannte "Ladeart", und eine Betriebsart zum Entladen der in dem Behälter (2) vorhandenen Produkte, so genannten "Verteilart", aufweist,
das Fahrzeug (1) ist **dadurch gekennzeichnet, dass** es eine Vorrichtung (8) zur Vorschubkraftregulierung umfasst, die von dem motorisierten fahrenden Rahmen (6) bereitgestellt wird, die so ausgestaltet ist, um aktiv zu sein, wenn das Entnahmeelement (4) von dem Fahrer in der Ladeart und/oder bei einem Druck auf ein Bremspedal in der Ladeart oder in der Verteilart aktiviert wird.

2. Fahrzeug nach Anspruch 1, **dadurch gekennzeichnet, dass** die Vorrichtung zur Regulierung (8) aus einer Vorrichtung zur automatischen Bestimmung der maximalen Schub- oder Vorschubkraft, die der Lade- und/oder Verteilart verfügbar ist, besteht.

3. Fahrzeug nach Anspruch 1 oder 2, **dadurch gekennzeichnet, dass** die Vorrichtung zur Regulierung (8) automatischer Art ist und aus einer passiven oder aktiven Begrenzungs- oder Bremsvorrichtung besteht, welche das Drehmoment begrenzt, das auf die Zug- und/oder Antriebsrollmittel (6') angewandt wird, welche Teil des motorisierten fahrenden Rahmens (6) sind.

4. Fahrzeug nach irgendeinem der Ansprüche 1 und 2, **dadurch gekennzeichnet, dass** das (die) Motorisierungs- oder Antriebssystem(e) (9) der Rollmittel (6') des motorisierten fahrenden Rahmens (6) hydraulischer Art ist und dadurch, dass die Vorrichtung zur Regulierung (8) automatischer Art ist und einen Druckbegrenzer umfasst bzw. aus einem solchen besteht, der in den Versorgungskreis (9') des Motorisierungssystems (9) integriert ist, das Teil des motorisierten fahrenden Rahmens (6) ist.

5. Fahrzeug nach irgendeinem der Ansprüche 1 bis 4, **dadurch gekennzeichnet, dass** die Vorrichtung zur Regulierung (8) automatischer Art ist und wenigstens einen Sensor (10) umfasst, dessen Messsignal von einem elektronischen System (11) ausgewertet wird, um die Vorschubkraft zu regulieren.

6. Fahrzeug nach Anspruch 5, **dadurch gekennzeichnet, dass** der Sensor oder einer der Sensoren (10) ein Drucksensor ist, der montiert und ausgestaltet ist, um den Druck wenigstens eines Teils des hydraulischen Versorgungskreises (9') des Motorisierungssystems (9) des motorisierten fahrenden Rahmens (6) zu messen.

7. Fahrzeug nach Anspruch 5, **dadurch gekennzeichnet, dass** der Sensor oder einer der Sensoren (10) ein Drucksensor ist, der montiert und ausgestaltet ist, um die Druckkraft (FP) zu messen, die auf das Entnahmeelement (4) und/oder den Ladearm (3) ausgeübt wird, dies in der Richtung, die der normalen Vorschubrichtung (DA) des Fahrzeugs (1) während eines Ladevorgangs entgegengesetzt ist.

8. Fahrzeug nach Anspruch 5, **dadurch gekennzeichnet, dass** der Sensor oder einer der Sensoren (10) ein Drehmoment- oder Geschwindigkeitssensor ist, der montiert und ausgestaltet ist, um entweder das Drehmoment, das auf ein Entnahmeelement (4) drehender Art, wie eine Fräse, angewandt wird, oder die Drehgeschwindigkeit des Elements (4) zu messen.

9. Fahrzeug nach Anspruch 5, **dadurch gekennzeichnet, dass** der Sensor oder einer der Sensoren (10) ein Schlupfsensor der Rollmittel (6') des motorisierten fahrenden Rahmens (6) ist.

10. Fahrzeug nach irgendeinem der Ansprüche 1 bis 9, **dadurch gekennzeichnet, dass** der Führerstand (7) zusätzlich zu dem Bremspedal (7") mit einem Steuerhebel (7') ausgestattet ist, um das Fahrzeug (1) und seine Einrichtungen zu steuern, zum Beispiel in Form eines Multifunktionsgriffes, der mit Tasten und/oder Schaltern ausgestattet ist.

11. Fahrzeug nach irgendeinem der Ansprüche 1 bis 10, **dadurch gekennzeichnet, dass** es aus einem landwirtschaftlichen Fahrzeug besteht, von der Art eines selbstfahrenden Mischwagens, der vorzugsweise auch mit Wiegemitteln ausgestattet ist.

## Claims

1. Self-propelled vehicle operated by a driver for collecting, possibly processing, and distributing fragmented, especially granular and/or fibrous products, comprising a mixing container (2), a loader arm (3), fitted with a pick-up element (4) at its free end and equipped with a transfer device (5) for transferring the products picked up by the element (4) to the container (2) and a powered rolling frame (6) carrying, in particular, the aforementioned container (2) and arm (3), as well as a driver's cab (7), said vehicle (1) having, in particular, an operational operating mode called "loading mode" for filling the container (2) with the loader arm (3) and an operating mode called "distribution mode" for unloading the products in the container (2); vehicle (1) **characterised in that** it comprises a regulating device (8) for the advancement force provided by the powered rolling frame (6), configured to be active when the pick-up element (4) is activated by the driver in the loading mode and/or when a brake pedal is pressed in the loading or distribution mode.

2. Vehicle according to claim 1, **characterised in that** the regulating device (8) consists of a device for automatically determining the maximum pushing or advancement force available in the loading and/or distribution mode.

3. Vehicle according to claim 1 or 2, **characterised in that** the regulating device (8) is of the automatic type and consists of a passive or active limiting or braking device that limits the torque applied to the pulling and/or propelling rolling means (6') that are part of the powered rolling frame (6).

4. Vehicle according to any one of claims 1 and 2, **characterised in that** the motorization or drive system(s) (9) of the rolling means (6') of the powered rolling frame (6) are of the hydraulic type, and **in that** the regulating device (8) is of the automatic type and comprises or consists of a pressure limiter built into the supply circuit (9') of the motorization system (9) that is part of the powered rolling frame (6).

5. Vehicle according to any one of claims 1 to 4, **characterised in that** the regulating device (8) is of the automatic type and comprises at least one sensor (10) whose measurement signal is used by an electronic system (11) to regulate the advancement force.

6. Vehicle according to claim 5, **characterised in that** the sensor, or one of the sensors (10), is a pressure sensor, mounted and configured to measure the pressure in at least a portion of the hydraulic supply circuit (9') of the motorization system (9) of the powered rolling frame (6).

7. Vehicle according to claim 5, **characterised in that** the sensor, or one of the sensors (10), is a pressure sensor mounted and configured to measure the pressure force (FP) exerted on the pick-up element (4) and/or on the loader arm (3), in the direction opposite to the normal direction of advance (DA) of the vehicle (1) during a loading operation.

8. Vehicle according to claim 5, **characterised in that** the sensor, or one of the sensors (10), is a torque sensor or speed sensor mounted and configured to measure either the torque applied to a rotary-type pick-up element (4), such as a cutter, or the speed of rotation of said element (4).

9. Vehicle according to claim 5, **characterised in that** the sensor, or one of the sensors (10), is a slip or skid sensor of the rolling means (6') of the powered rolling frame (6).

10. Vehicle according to any one of claims 1 to 9, **characterised in that** the driver's cab (7) is fitted, in addition to the brake pedal (7"), with a control lever (7') to control the vehicle (1) and its equipment, for example in the form of a multifunction grip fitted with knobs and/or selectors.

11. Vehicle according to any one of claims 1 to 10, **characterised in that** it consists of a self-propelled mixer wagon type agricultural vehicle, preferably additionally fitted with weighing means.
